(19) Europäisches Patentamt

European Patent Office

Office européen des brevets

(11) **EP 0 943 844 B1**

(12) **EUROPÄISCHE PATENTSCHRIFT**

(45) Veröffentlichungstag und Bekanntmachung des Hinweises auf die Patenterteilung:
**06.08.2003 Patentblatt 2003/32**

(51) Int Cl.⁷: **F16H 61/02**, F16H 59/56
// F16H59:04, F16H59:42,
F16H59:56, F16H61:04

(21) Anmeldenummer: **99104833.1**

(22) Anmeldetag: **11.03.1999**

(54) **Verfahren zur Steuerung eines Getriebes**

Method for controlling a transmission

Méthode de commande d'une transmission

(84) Benannte Vertragsstaaten:
**DE FR IT SE**

(30) Priorität: **17.03.1998 US 78339 P**

(43) Veröffentlichungstag der Anmeldung:
**22.09.1999 Patentblatt 1999/38**

(73) Patentinhaber: **WABCO GmbH & CO. OHG**
**30453 Hannover (DE)**

(72) Erfinder:
• **Böckmann, Gerhard**
**30880 Laatzen (DE)**
• **Böhm, Andreas**
**30974 Wennigsen (DE)**

(74) Vertreter: **Schrödter, Manfred**
**WABCO GmbH & Co. OHG,**
**Postfach 91 12 62**
**30432 Hannover (DE)**

(56) Entgegenhaltungen:
**EP-A- 0 608 978**     **EP-A- 0 641 958**
**EP-A- 0 727 597**     **EP-A- 0 784 171**
**WO-A-97/44210**     **DE-A- 4 230 989**
**DE-A- 19 530 233**

**Beschreibung**

Die Erfindung betrifft ein Verfahren zur Steuerung eines Getriebes gemäß dem Oberbegriff des Patentanspruchs 1.

Ein derartiges Verfahren ist aus der WO 97/44210 bekannt.

Das bekannte Verfahren dient zur Steuerung eines manuell schaltbaren, unsynchronisierten Fahrzeuggetriebes herkömmlicher Bauart mit einer Vielzahl von Gängen, welches mittels einer Steuereinrichtung für das Getriebe, die im folgenden auch als Getriebesteuereinrichtung bezeichnet wird, teilweise automatisiert betrieben wird. Die Automatisierung besteht darin, daß die mechanischen Bewegungen, die für einen Gangwechsel erforderlich sind, von einer elektropneumatischen Stelleinrichtung infolge von Ansteuersignalen der Getriebesteuereinrichtung vorgenommen werden.

Bei einer Getriebesteuereinrichtung dieser Art ist eine von dem Fahrer zwecks Gangauswahl zu betätigende Bedieneinheit vorgesehen, die nicht wie bei herkömmlichen Getrieben mechanisch mit dem Getriebe verbunden ist, sondern bei Betätigung entsprechende Signale an die Getriebesteuereinrichtung abgibt.

Das Getriebe ist über eine von dem Fahrer zu bedienende Kupplung mit dem Antriebsmotor des Fahrzeuges trennbar verbunden. Bei dem bekannten Verfahren bewirkt die Getriebesteuereinrichtung in Abhängigkeit von einer Betätigung der Bedieneinheit durch den Fahrer ein automatisiertes Schalten von dem aktuell eingelegten Gang in den von dem Fahrer ausgewählten Gang. Die Getriebesteuereinrichtung gibt dabei neben den Ansteuersignalen an die elektropneumatische Stelleinrichtung außerdem geeignete Anforderungssignale an eine Motorsteuereinrichtung ab, durch die die Motorleistung derart gesteuert wird, daß für einen Gangwechsel die Kupplung nicht geöffnet werden muß. Hierdurch wird der Fahrer während der Fahrt davon entlastet, beim Gangwechsel die Kupplung zu betätigen.

Wenn sich das Getriebe in der Neutralstellung befindet, d. h. wenn kein Gang eingelegt ist, und das Fahrzeug stillsteht oder relativ langsam rollt, würde bei geschlossener Kupplung der Getriebeeingang permanent mit der relativ hohen Drehzahl des Antriebsmotors drehen, während der Getriebeausgang stillsteht bzw. eine relativ geringe Drehzahl aufweist. In diesem Fall kann die Getriebesteuereinrichtung keine Synchronisation der Getriebezahnräder erwirken, so daß kein Gang eingelegt werden kann. Das Einlegen eines Gangs ist dann nur möglich, wenn die Kupplung geöffnet wird.

Nach dem Öffnen der Kupplung verringert sich die Drehzahl des Getriebeeingangs relativ schnell bis zum Stillstand. Bei Bedarf kann diese Drehzahlverringerung durch Betätigung einer auf den Getriebeeingang einwirkenden Bremse noch unterstützt werden. Hierbei kann das Problem auftreten, daß durch eine Zahn-auf-Zahn-Stellung der Getriebeklauen das Einlegen des Gangs verhindert wird. Ein derartiger Zustand ist für den Fahrer bei einer Getriebesteuerung der vorliegenden Art nicht ohne weiteres erkennbar. Bei herkömmlichen Getrieben mit mechanisch mit dem Getriebe verbundenem Schaltknüppel wäre der Fahrer des Fahrzeuges in der Lage, infolge eines bestimmten Widerstands beim Betätigen des Schalthebels haptisch zu erkennen, ob die Zahn-auf-Zahn-Stellung vorliegt. In einem solchen Fall wäre es als Abhilfemaßnahme erforderlich, die Kupplung zu schließen.

Bei einer Getriebesteuereinrichtung der vorliegenden Art wird dem Fahrer keine haptische Rückmeldung mittels eines Schalthebels gegeben. Die EP 608 978 A zeigt eine Warneinrichtung für eine derartige Getriebesteuerung.

Aus der DE 42 30 989 A ist ein Verfahren zum Schalten eines Verteiler- oder Zwischengetriebes bekannt, wobei das Zwischengetriebe nur zwei Gänge aufweist, nämlich Straßenund Geländegang. Die dem bekannten Verfahren zugrundeliegende technische Problematik liegt darin, daß beim Zurückschalten von dem Straßengang in den Geländegang bei bekannten Verfahren der Schaltvorgang relativ viel Zeit benötigt, was dazu führen kann, daß das Fahrzeug beim Zurückschalten oft schon stark an Geschwindigkeit verliert oder ganz zum Stillstand kommt. Dies vermeidet das Verfahren durch entsprechend früheres Auslösen bestimmter Teil-Vorgänge beim Zurückschalten.

Aus der EP-A-0 641 958 ist ein Verfahren zur Steuerung eines automatischen Fahrzeuggetriebesystems bekannt. Dort soll ebenfalls das Schalten von einem Gang in einen anderen schneller als bei bekannten Getriebesteuerungen durchgeführt werden.

Die beiden zuvor genannten Verfahren beziehen sich auf fahrende Fahrzeuge und betreffen nicht die Frage, auf welche Weise zuverlässig bei einem unsynchronisierten Getriebe im Bereich des Fahrzeugstillstandes überhaupt ein Gang eingelegt werden kann.

Der Erfindung liegt daher die Aufgabe zugrunde, ein Verfahren zur Steuerung eines unsynchronsierten Getriebes anzugeben, das das Einlegen eines ausgewählten Gangs bei Fahrzeugstillstand auf eine einfache und zuverlässige Weise ermöglicht.

Diese Aufgabe wird durch die in dem Patentanspruch 1 angegebene Erfindung gelöst. Weiterbildungen und vorteilhafte Ausgestaltungen der Erfindung sind in den Unteransprüchen angegeben.

Die Erfindung kann sowohl für Fahrzeuge mit von dem Fahrer zu betätigender Kupplung, wie eingangs beschrieben, als auch für Fahrzeuge mit einer automatisierten Stelleinrichtung für die Kupplung, z. B. mit einem druckmittelbetriebenen Stellzylinder, vorteilhaft eingesetzt werden. Die nachfolgend aufgeführten Vorteilsangaben der Erfindung sowie das Ausführungsbeispiel gelten sinngemäß auch für die Anwendung der Erfindung in einem Fahrzeug mit einer automatisierten Stelleinrichtung für die Kupplung.

Die Erfindung hat den Vorteil, daß das Einlegen eines Gangs bei Fahrzeugstillstand für den Fahrer systematisiert und vereinfacht wird. Ein besonderer Vorteil ist, daß der Fahrer davon entlastet wird, das Erreichen und relativ kurzzeitige Vorliegen eines geeigneten Drehzahlbereichs des Getriebeeingangs, bei welchem das Einlegen eines Gangs möglich ist, zu erkennen.

Ein weiterer Vorteil ist, daß der Fahrer nicht mehrfach die Kupplung öffnen und wieder schließen muß, um die bereits erwähnte Zahn-auf-Zahn-Stellung zu vermeiden. Da bei dem erfindungsgemäßen Verfahren, im Gegensatz zu dem Schaltvorgang bei herkömmlichen, manuell schaltbaren Getrieben, das Öffnen der Kupplung nach der Auswahl eines gewünschten Gangs erfolgt, ist bei geeigneter Auslegung der Getriebesteuereinrichtung sichergestellt, daß der Gang bereits vor dem Erreichen des Stillstands des Getriebeeingangs eingelegt worden ist, d. h. während einer relativ kurzen Zeit nach dem Öffnen der Kupplung, in der die Drehzahl des Getriebeeingangs in einem geeigneten, vorgegebenen Drehzahlbereich, innerhalb dessen ein Gang eingelegt werden kann, liegt. Daher sind bei Anwendung des Verfahrens gemäß der Erfindung auch ungeübte Fahrer ohne weiteres in der Lage, bei einem unsynchronisierten Getriebe einen Gang einzulegen.

In einer weiteren vorteilhaften Weiterbildung der Erfindung wird nach Erreichen des vorgegebenen Drehzahlbereichs überprüft, ob unter den aktuell vorliegenden Betriebsbedingungen des Fahrzeuges ein anderer Gang als der mittels der Bedieneinheit ausgewählte Gang ein besseres Fahrverhalten erwarten läßt und somit besser geeignet wäre. Wenn ein anderer Gang als besser geeignet befunden wird, so wird dieser Gang statt des mittels der Bedieneinheit von dem Fahrer ausgewählten Gangs eingelegt.

Beispielsweise wird bei bestimmten Fahrzeugen neuerer Bauart die Fahrzeugmasse von elektronischen Einrichtungen in dem Fahrzeug automatisch ermittelt, z. B. von einer elektrischen Bremsanlage, bei der die Fahrzeugmasse aufgrund der von den Bremsen ausgeübten Bremskräfte und der daraus resultierenden Verzögerung berechnet werden kann. Die Getriebesteuereinrichtung, der eine Information über die ermittelte Fahrzeugmasse beispielsweise über ein Datenbussystem zugeführt werden könnte, kann dann beurteilen, mit welchem Gang ein Anfahren des Fahrzeuges in Anbetracht der Fahrzeugmasse sinnvoll wäre. Falls beispielsweise der Fahrer irrtümlich mittels der Bedieneinheit den höchsten Gang zum Anfahren auswählen sollte, so würde die Getriebesteuereinrichtung automatisch in Abhängigkeit von der Fahrzeugmasse einen niedrigeren Gang bzw. den niedrigsten Gang auswählen und einlegen. Hierdurch kann ein Abwürgen des Motors vermieden werden.

Gemäß einer weiteren vorteilhaften Weiterbildung der Erfindung wird eine Überprüfung der Drehzahl des Getriebeeingangs sowie ein Vergleich mit dem vorgegebenen Drehzahlbereich zum Zwecke des automatisierten Gangeinlegens nach dem Öffnen der Kupplung nur dann durchgeführt, wenn von der Auswahl eines Gangs mittels der Bedieneinheit bis zum Öffnen der Kupplung weniger als eine vorgegebene Zeit vergangen ist. Nach Ablauf dieser vorgegebenen Zeit bewirkt das Öffnen der Kupplung somit nicht das Einlegen eines Gangs.

In einer weiteren vorteilhaften Weiterbildung der Erfindung wird nach Ablauf der vorgegebenen Zeit eine gespeicherte Information über den mittels der Bedieneinheit ausgewählten Gang gelöscht. Dies hat den Vorteil, daß eine versehentliche Betätigung der Bedieneinheit oder der Kupplung nicht zu einem unerwünschten Einlegen eines Gangs führt. In vorteilhafter Weise kann ein bereits ausgewählter Gang auch mittels der Bedieneinheit oder eines anderen Bedienelements wieder zurückgenommen werden, z. B. durch Betätigung eines Neutralschalters.

Die Erfindung wird im folgenden unter Verwendung von Zeichnungen näher erläutert.

Es zeigen

Fig. 1    eine Einrichtung zur Ausführung des erfindungsgemäßen Verfahrens und

Fig. 2 und 3    eine bevorzugte Ausgestaltung des erfindungsgemäßen Verfahrens in Flußdiagrarammdarstellung.

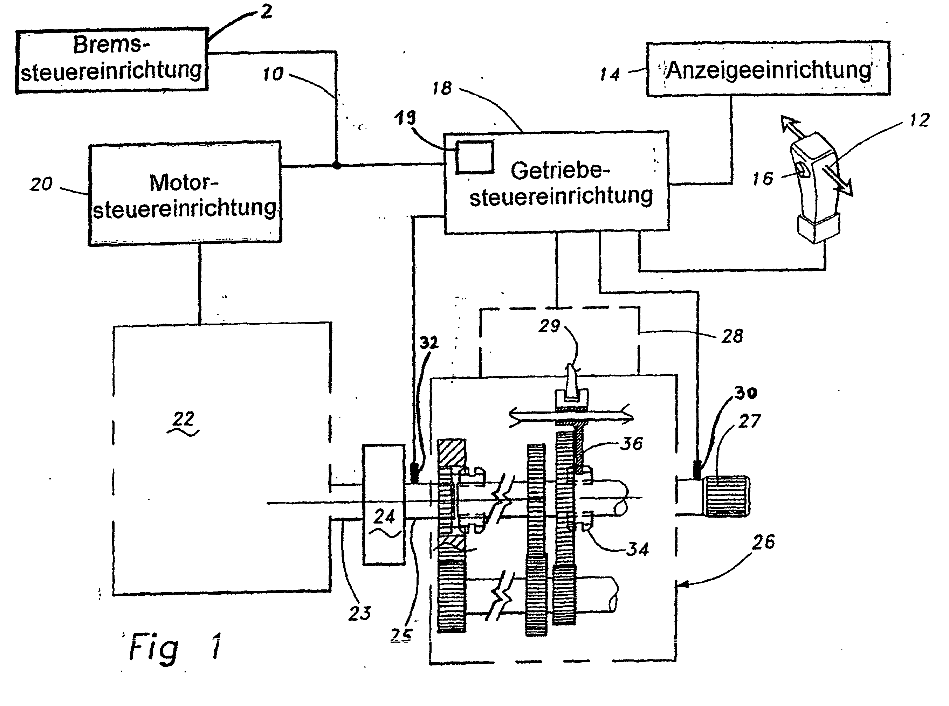

Die in der Fig. 1 dargestellte Einrichtung weist einen Motor (22) auf, der zum Antrieb eines Fahrzeuges dient, in dem die dargestellte Einrichtung eingesetzt wird. Der Motor (22) gibt seine Antriebsleistung in Form einer Drehbewegung über eine Motorabtriebswelle (23) an eine Kupplung (24) bekannter Bauart ab. Die Kupplung (24) kann mittels eines Pedals von dem Fahrer des Fahrzeuges in einen geöffneten und in einen geschlossenen Zustand bewegt werden. Ohne Betätigung des Pedals ist die Kupplung geschlossen, wogegen bei Betätigung des Pedals die Kupplung geöffnet wird. Im geschlossenen Zustand überträgt die Kupplung (24) die Drehbewegung der Motorabtriebswelle (23) auf die Getriebeantriebswelle (25). Bei geöffneter Kupplung hingegen wird diese Drehbewegung nicht auf die Getriebeantriebswelle (25) übertragen.

Das Getriebe (26) dient zur Übertragung der Drehbewegung von der Getriebeantriebswelle (25) auf eine Getriebeabtriebswelle (27) mit einem veränderbaren Übersetzungsverhältnis. Die Getriebeabtriebswelle (27) ist über weitere Teile, wie z. B. eine weitere Welle, ein Kardangelenk, ein Differentialgetriebe usw. mit den Antriebsrädern des Fahrzeuges verbunden.

Das Getriebe (26) weist eine Vielzahl von Zahnrädern auf, welche zur Auswahl eines gewünschten Übersetzungsverhältnisses miteinander wechselweise in Eingriff gebracht werden können. Für die Einstellung des Übersetzungsverhältnisses bzw. der Kombination der Zahnräder sind mechanische Übertragungsteile (34, 36) vorgesehen, durch welche die Zahnräder verschoben werden können. Die mechanischen Übertragungselemente (34, 36) werden mittels eines Schaltfingers (29) von einem elektrisch betätigbaren Getriebeaktuator (28) bewegt. Der Getriebeaktuator (28) kann beispielsweise mit Elektromotoren ausgestattete Servoeinrichtungen aufweisen. In einer bevorzugten Ausgestaltung der Erfindung weist der Getriebeaktuator druckmittelbetätigbare Stellzylinder auf, welche über Elektromagnetventile mit wechselndem Druck aus einer Druckmittelquelle, z. B. einem Druckluftvorratsbehälter, beaufschlagbar sind.

Zur Steuerung der Getriebefunktionen ist der Getriebeaktuator (28) über elektrische Leitungen mit einer Getriebesteuereinrichtung (18) verbunden. Die Getriebesteuereinrichtung (18) ist außerdem mit Drehzahlsensoren (30, 32) verbunden, welche Informationen über die Getriebeeingangsdrehzahl, d.h. die Drehzahl der Getriebeantriebswelle (25), und über die Getriebeausgangsdrehzahl, d.h. die Drehzahl der Getriebeabtriebswelle (27), an die Getriebesteuereinrichtung (18) abgeben.

Des weiteren ist die Getriebesteuereinrichtung (18) mit einer Bedieneinheit (12, 16) verbunden, die einen Bedienhebel (12) und einen vorzugsweise an dem Bedienhebel (12) angeordneten Neutralschalter (16) aufweist. Mittels der Bedieneinheit (12, 16) kann der Fahrer des Fahrzeuges der Getriebesteuereinrichtung (18) mitteilen, welcher Gang eingelegt werden soll. In einer bevorzugten Ausgestaltung der Erfindung wird durch eine Vorwärtsbewegung des Bedienhebels (12) das Getriebe (26) um einen Gang hochgeschaltet, während durch eine Rückwärtsbewegung um einen Gang heruntergeschaltet wird. Durch Betätigung des Neutralschalters wird das Getriebe (26) in die Neutralstellung geschaltet, d. h. es wird kein Gang eingelegt.

Die Getriebesteuereinrichtung (18) ist über ein Datenbussystem (10) mit weiteren in dem Fahrzeug vorhandenen Steuereinrichtungen, z. B. einer Motorsteuereinrichtung (20) und einer Bremssteuereinrichtung (2), zum Datenaustausch verbunden. Über geeignete Daten-Botschaften kann die Getriebesteuereinrichtung (18) der Motorsteuereinrichtung (20) mitteilen, daß beispielsweise für einen Gangwechsel eine bestimmte Motordrehzahl eingestellt werden soll. Über andere Daten-Botschaften kann die Getriebesteuereinrichtung (18) beispielsweise von der Bremssteuereinrichtung (2) eine Information über bestimmte Fahrzeugdaten, wie z. B. die Fahrzeugmasse, erhalten.

Die Getriebesteuereinrichtung (18) ist des weiteren mit einer vorzugsweise im Blickfeld des Fahrers angeordneten Anzeigeeinrichtung (14) verbunden, auf der bestimmte Informationen angezeigt werden können, z. B. den vom Fahrer mittels der Bedieneinheit (12, 16) ausgewählten Gang (AGANG) oder den einzulegenden oder bereits aktuell eingelegten Gang (EGANG). In der Getriebesteuereinrichtung (18) ist außerdem ein nichtflüchtiger Speicher (19) angeordnet.

Die Getriebesteuereinrichtung (18), die Motorsteuereinrichtung (20) und die Bremssteuereinrichtung (2) sind vorzugsweise als elektronische Steuergeräte ausgebildet. Sie können auch als ein einziges Steuergerät ausgebildet sein.

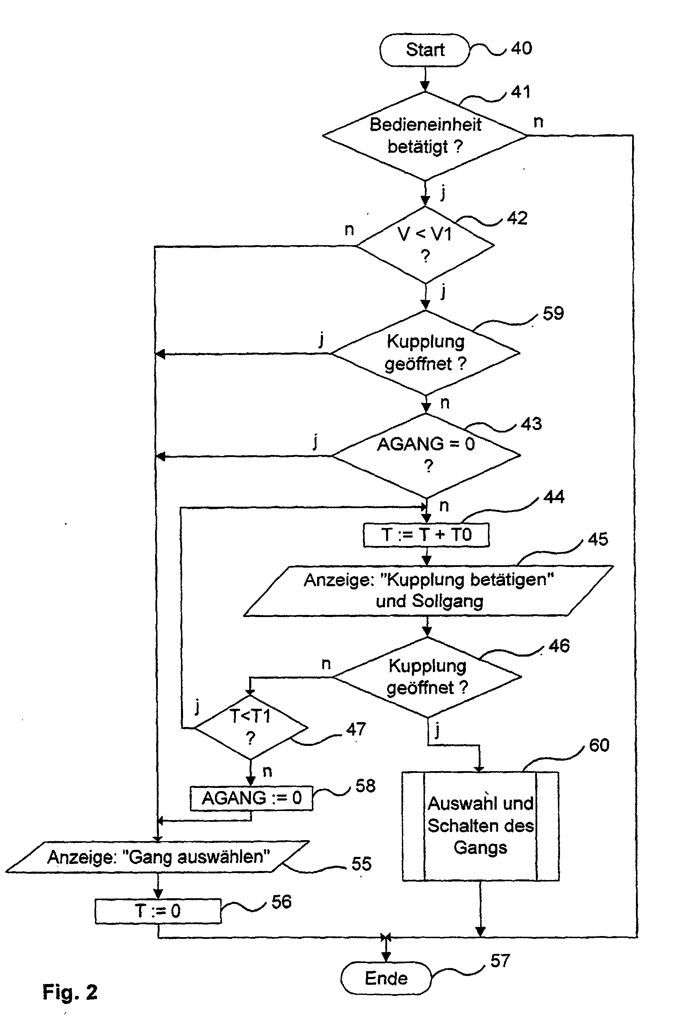

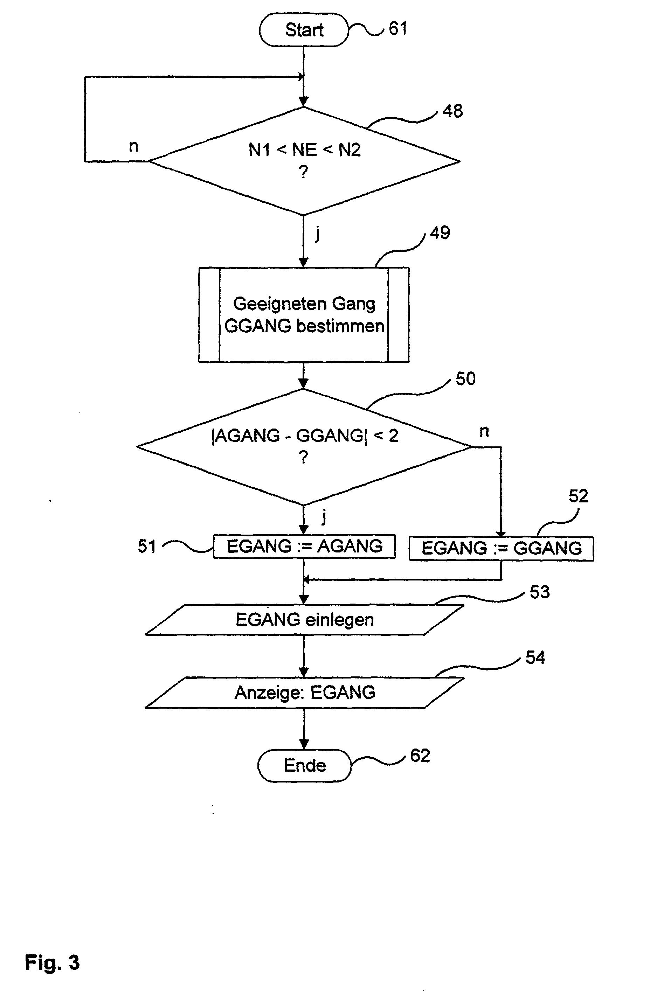

Anhand der Figuren 2 und 3 soll eine bevorzugte Ausgestaltung des erfindungsgemäßen Verfahrens erläutert werden. Das dort dargestellte Verfahren ist vorzugsweise als Teil eines Steuerprogramms für einen in der Getriebesteuereinrichtung (18) angeordneten Mikroprozessor ausgebildet. Das Verfahren beginnt nach einer in der Fig. 2 nicht dargestellten Initialisierungsphase mit dem Block (40).

In einem darauf folgenden Verzweigungsblock (41) wird überprüft, ob eine Betätigung der Bedieneinheit (12, 16) erfolgt ist. Wenn dies nicht der Fall ist, so ist keine weitere Aktion erforderlich, und es wird unter Umgehung der weiteren Verfahrensschritte direkt zu dem Block (57) verzweigt, mit dem das Verfahren endet. Anderenfalls wird zu einem weiteren Verzweigungsblock (42) verzweigt, in dem überprüft wird, ob die Fahrzeuggeschwindigkeit (V) einen vorgegebenen Geschwindigkeitswert (V1) unterschreitet. Wenn der vorgegebene Geschwindigkeitswert (V1) nicht unterschritten wird, dann wird unter Ausführung der Blöcke (55, 56) ebenfalls zu dem Block (57) verzweigt, mit dem das Verfahren endet.

In dem hierbei ausgeführten Datentransferblock (55) wird eine Information auf die Anzeigeeinrichtung (14) ausgegeben, die den Fahrer darüber informiert, daß für ein erfolgreiches Einlegen eines Gangs von dem Fahrer ein gewünschter Gang ausgewählt werden muß. Zur Darstellung dieser Information kann z. B. eine hierfür vorgesehene Lampe in der Anzeigeeinrichtung (14) eingeschaltet werden. Falls die Anzeigeeinrichtung (14) zur direkten Ausgabe von Zeicheninformationen geeignet ist, so kann auch direkt eine geeignete Mitteilung, z. B. "Gang auswählen" an die Anzeigeeinrichtung (14) ausgegeben werden. In dem ebenfalls ausgeführten Block (56) wird ein im folgenden noch näher erläuterter Zeitzähler (T) auf einen Anfangswert Null gesetzt.

Falls in dem Verzweigungsblock (42) jedoch die Fahrzeuggeschwindigkeit (V) den vorgegebenen Geschwindigkeitswert (V1) unterschreitet, dann wird mit einem weiteren Verzweigungsblock (59) fortgefahren, in dem überprüft wird, ob die Kupplung (24) geöffnet ist. Dies kann z. B. durch Auswertung des Signals eines in der Kupplung angeordneten Schalters bzw. Schaltkontakts erfolgen. Die Erkennung kann alternativ auch durch Vergleich der von dem Drehzahlsensor (32) ermittelten Drehzahlinformationen mit einer von der Motorsteuereinrichtung (20) über das Datenbussystem (10) übertragenen Motordrehzahlinformation vorgenommen werden. Bei einer größeren Abweichung dieser Drehzahlinformationen voneinander ist davon auszugehen, daß die Kupplung geöffnet ist. Falls die Kupplung bereits geöffnet ist, so wird unter Ausführung der bereits erläuterten Blöcke (55, 56) zu dem Block (57) verzweigt, mit dem das Verfahren endet.

Falls in dem Verzweigungsblock (59) jedoch festgestellt wird, daß die Kupplung nicht geöffnet ist, dann wird mit einem weiteren Verzweigungsblock (43) fortgefahren, in dem überprüft wird, ob von dem Fahrer bereits ein Gang (AGANG) ausgewählt worden ist. Falls kein ausgewählter Gang vorliegt (AGANG = 0), so wird unter Ausführung der Blöcke (55, 56) zu dem Block (57) verzweigt, mit dem das Verfahren endet.

Anderenfalls wird zu einem Zuweisungsblock (44) verzweigt. Dort wird der Zeitzähler (T) um ein Zeitinkrement (T0) erhöht. Der Zeitzähler (T) dient zur Überwachung der Zeit, die von dem Zeitpunkt der Auswahl des ausgewählten Gangs (AGANG) mittels der Bedieneinheit (12, 16) bis zum Öffnen der Kupplung (24) verstreicht.

In einem darauf folgenden Datentransferblock (45) wird an die Anzeigeeinrichtung (14) eine Information ausgegeben, die den Fahrer darüber informiert, daß zum Einlegen des Gangs die Kupplung zu betätigen ist. Zusätzlich kann in einer bevorzugten Ausgestaltung der Erfindung auch der ausgewählte Gang (AGANG) z. B. als Zahl auf der Anzeigeeinrichtung (14) dargestellt werden.

Sodann wird in einem Verzweigungsblock (46) überprüft, ob die Kupplung (24) geöffnet ist. Wenn die Kupplung nicht geöffnet ist, dann wird zu einem Verzweigungsblock (47) verzweigt, in dem der Zeitzähler (T) auf Überschreitung einer vorgegebenen Zeit (T1) überprüft wird. Wenn der Zeitzähler (T) anzeigt, daß weniger als die vorgegebene Zeit (T1) vergangen ist, so wird nach Art einer Programmschleife wiederum zu dem bereits erwähnten Zuweisungsblock (44) verzweigt. Anderenfalls wird zu einem Zuweisungsblock (58) verzweigt, wo der ausgewählte Gang (AGANG) auf den Wert Null gesetzt und somit die gespeicherte Information gelöscht wird. Daraufhin wird das Verfahren unter Ausführung der Blöcke (55, 56, 57) beendet.

Wenn die Kupplung hingegen vor Ablauf der vorgegebenen Zeit (T1) geöffnet wird, dann wird das Verfahren mit einem Unterprogrammblock (60) fortgesetzt. Der Unterprogrammblock (60) ist in der Fig. 3 näher dargestellt.

Gemäß Fig. 3 wird nach Ausführung des Blocks (61) das Verfahren mit dem Verzweigungsblock (48) fortgesetzt, in dem überprüft wird, ob die Drehzahl (NE) des Getriebeeingangs einen vorgegebenen Drehzahlbereich erreicht hat. Der vorgegebene Drehzahlbereich beginnt bei einem unteren Drehzahlgrenzwert (N1) und endet bei einem oberen Drehzahlgrenzwert (N2). In einer bevorzugten Ausgestaltung der Erfindung ist der untere Drehzahlgrenzwert (N1) bei Fahrzeugstillstand die Drehzahl Null. In dem Verzweigungsblock (48) wird geprüft, ob die Drehzahl (NE) innerhalb des durch die Drehzahlgrenzwerte (N1, N2) festgelegten Bereiches liegt. Der Verzweigungsblock (48) wird so lange wiederholt ausgeführt, bis die zuvor genannte Bedingung erfüllt ist. Sodann wird mit einem Unterprogrammblock (49) fortgefahren. Dort wird gemäß der zuvor schon erwähnten Vorgehensweise unter Verwendung der Fahrzeugmasse ein für die vorliegenden Betriebsbedingungen des Fahrzeuges besonders geeigneter Gang (GGANG) bestimmt. Dies kann beispielsweise in der Art geschehen, daß bei unbeladenem Fahrzeug der vierte Gang als geeigneter Gang (GGANG) bestimmt wird. Bei mittlerer Beladung könnte der dritte Gang und im Bereich höchstzulässiger Beladung der zweite Gang als geeigneter Gang (GGANG) bestimmt werden. Weitere zweckmäßige Arten der Bestimmung des geeigneten Gangs (GGANG) sind dem Fachmann geläufig.

Daraufhin wird mittels der Blöcke (50, 51, 52) entweder der von dem Fahrer ausgewählte Gang (AGANG) oder, wenn eine bestimmte Abweichung zwischen dem von dem Fahrer ausgewählten Gang (AGANG) und dem zuvor bestimmten geeigneten Gang (GGANG) vorliegt, der geeignete Gang (GGANG) als einzulegender Gang (EGANG) übernommen. Hierfür wird in dem Verzweigungsblock (50) zunächst geprüft, ob der ausgewählte Gang (AGANG) um weniger als zwei Gänge nach oben oder unten von dem geeigneten Gang (GGANG) abweicht. Wenn dies der Fall ist, so wird in dem Zuweisungsblock (51) der einzulegende Gang (EGANG) auf den von dem Fahrer ausgewählten Gang (AGANG) gesetzt. Anderenfalls ist davon auszugehen, daß der von dem Fahrer gewünschte, mittels der Bedieneinheit (12, 16) ausgewählte Gang (AGANG) für die vorliegenden Betriebsbedingungen des Fahrzeuges ungeeignet ist, so daß in dem Zuweisungsblock (52) der einzulegende Gang (EGANG) auf den geeigneten Gang (GGANG) gesetzt wird. Hierdurch wird, mit anderen Worten ausgedrückt, die Auswahl des Fahrers korrigiert.

Sodann wird mittels eines Datentransferblocks (53) eine entsprechende Ansteuerinformation an den Getriebeaktuator (28) abgegeben, so daß der zuvor bestimmte einzulegende Gang (EGANG) im Getriebe eingelegt wird. Daraufhin erfolgt in einer bevorzugten Ausgestaltung der Erfindung in einem Datentransferblock (54) die Übergabe einer Information an die Anzeigeeinrichtung (14), mittels der der zuvor einzulegende und nunmehr aktuell eingelegte Gang (EGANG) dem Fahrer angezeigt wird.

Daraufhin endet der Unterprogrammblock (60) mit dem Block (62). Hiermit endet auch das Verfahren gemäß Fig. 2 mit dem Block (57).

In einer bevorzugten Ausgestaltung der Erfindung ist der vorgegebene Drehzahlbereich (N1, N2) in Abhängigkeit von der Fahrzeuggeschwindigkeit (V) bzw. der Drehzahl des Getriebeausgangs (NA) und der für den einzulegenden Gang (EGANG) zu erwartenden Getriebeübersetzung veränderbar. Die Veränderung dieses Drehzahlbereichs bzw. der den Drehzahlbereich begrenzenden Drehzahlgrenzwerte (N1, N2) erfolgt in einer bevorzugten Ausgestaltung der Erfindung gemäß den folgenden Formeln:

$$N1 = G \cdot NA + NG1$$

$$N2 = G \cdot NA + NG2$$

Hierbei stellt die Größe (NA) die Getriebeausgangsdrehzahl dar, die Größe (G) die für den einzulegenden Gang (EGANG) zu erwartende Getriebeübersetzung und die Größen (NG1, NG2) getriebespezifische Drehzahlwerte, bei denen das Einlegen eines Gangs beschädigungsfrei möglich ist. Die getriebespezifischen Drehzahlwerte (NG1, NG2) können den Angaben des Getriebeherstellers entnommen werden oder sind alternativ durch Versuche zu ermitteln. Diese Werte (NG1, NG2) werden vorzugsweise in dem nichtflüchtigen Speicher (19) gespeichert. In einer bevorzugten Ausführungsform der Erfindung erfolgt die zuvor beschriebene Veränderung der Drehzahlgrenzwerte (N1, N2) erst bei Erreichen bzw. Überschreiten eines vorbestimmten Mindestwertes der Getriebeausgangsdrehzahl (NA).

**Patentansprüche**

1. Verfahren zur Steuerung des Einlegens eines ausgewählten Gangs bei einem unsynchronisierten Getriebe (26) mit mehreren Gängen für ein motorbetriebenes Fahrzeug im Bereich des Fahrzeugstillstands, wobei das Fahrzeug eine Steuereinrichtung (18) für das Getriebe (26), eine Kupplung (24) zur Verbindung des Motors (22) mit dem Getriebe (26), eine Bedieneinheit (12, 16) zur Auswahl eines gewünschten Gangs und Mittel (32) zur Erfassung der Drehzahl (NE) des Getriebeeingangs aufweist, **gekennzeichnet durch** folgende Merkmale:

   a) es wird geprüft, ob die Fahrzeuggeschwindigkeit (V) einen vorgegebenen Geschwindigkeitswert (V1), welcher eine Fahrzeuggeschwindigkeit (V) in der Nähe des Fahrzeugstillstands angibt, unterschreitet,

   b) wenn die Fahrzeuggeschwindigkeit (V) den vorgegebenen Geschwindigkeitswert (V1) unterschreitet, wird geprüft, ob mittels der Bedieneinheit (12, 16) ein Gang (AGANG) ausgewählt wird,

   c) wenn ein Gang (AGANG) ausgewählt wurde, wird geprüft, ob die Kupplung (24) geöffnet wird,

   d) wenn die Kupplung (24) geöffnet wurde, wird die Drehzahl (NE) des Getriebeeingangs mit einem vorgegebenen Drehzahlbereich (N1, N2) verglichen,

   e) wenn die Drehzahl (NE) des Getriebeeingangs den vorgegebenen Drehzahlbereich (N1, N2) erreicht hat, wird automatisch ein einzulegender Gang (EGANG) eingelegt.

2. Verfahren nach Anspruch 1, **dadurch gekennzeichnet, daß** der einzulegende Gang (EGANG) der mittels der Bedieneinheit (12, 16) ausgewählte Gang (AGANG) ist.

3. Verfahren nach Anspruch 2, **dadurch gekennzeichnet, daß** überprüft wird, ob unter den vorliegenden Betriebsbedingungen des Fahrzeuges ein anderer Gang (GGANG) besser geeignet ist als der einzulegende Gang (EGANG), und daß, wenn der andere Gang (GGANG) besser geeignet ist, der andere Gang (GGANG) als einzulegender Gang (EGANG) verwendet wird.

4. Verfahren nach einem der vorhergehenden Ansprüche, **dadurch gekennzeichnet, daß** in einem in der Steuereinrichtung (18) angeordneten veränderbaren, nichtflüchtigen Speicher (19) Informationen über den vorgegebenen Geschwindigkeitswert (V1) und/oder den vorgegebene Drehzahlbereich (N1, N2) gespeichert sind.

5. Verfahren nach einem der vorhergehenden Ansprüche, **dadurch gekennzeichnet, daß** der Verfahrensschritt e) des Patentanspruchs 1 nur dann ausgeführt wird, wenn seit der Ausführung des Verfahrensschritts c) des Patentanspruchs 1 weniger als eine vorgegebene Zeit (T1) vergangen ist.

6. Verfahren nach Anspruch 5, **dadurch gekennzeichnet, daß** nach Ablauf der vorgegebenen Zeit (T1) eine gespeicherte Information über den mittels der Bedieneinheit (12, 16) ausgewählten Gang (AGANG) gelöscht wird.

7. Verfahren nach einem der vorhergehenden Ansprüche, **dadurch gekennzeichnet, daß** das Warten auf die Ausführung des Verfahrensschritts c) des Patentanspruchs 1 optisch angezeigt wird.

8. Verfahren nach einem der vorhergehenden Ansprüche, **dadurch gekennzeichnet, daß** der mittels der Bedieneinheit (12, 16) ausgewählte Gang (AGANG) optisch angezeigt wird.

9. Verfahren nach einem der vorhergehenden Ansprüche, **dadurch gekennzeichnet, daß** die Kupplung (24) von dem Fahrer zu betätigen ist.

**Claims**

1. Method of controlling the engagement, in the region of vehicle standstill, of a selected gear in an unsynchronised gear mechanism (26) having a plurality of gears for a motor-driven vehicle, the vehicle having a control device (18) for the gear mechanism (26), a coupling (24) for connecting the motor (22) to the gear mechanism (26), an operating unit (12, 16) for selecting a desired gear, and means (32) for ascertaining the rotational speed (NE) of the gear mechanism input, **characterised by** the following features:

a) it is checked whether the vehicle velocity (V) is lower than a predetermined velocity value (V1) indicating a vehicle velocity (V) in the vicinity of vehicle standstill;

b) if the vehicle velocity (V) is lower than the predetermined velocity value (V1), it is checked whether a gear (AGANG) is selected by the operating unit (12, 16);

c) if a gear (AGANG) has been selected, it is checked whether the coupling (24) is open;

d) if the coupling (24) has been opened, the rotational speed (NE) of the gear mechanism input is compared with a predetermined rotational speed range (N1, N2);

e) if the rotational speed (NE) of the gear mechanism input has reached the predetermined rotational speed range (N1, N2), a gear to be engaged (EGANG) is automatically engaged.

2. Method according to claim 1, **characterised in that** the gear to be engaged (EGANG) is the gear (AGANG) selected by the operating unit (12, 16).

3. Method according to claim 2, **characterised in that** it is checked whether, under the prevailing operating conditions of the vehicle, another gear (GGANG) is more suitable than the gear to be engaged (EGANG); and, if the other gear (GGANG) is more suitable, the other gear (GGANG) is used as the gear to be engaged (EGANG).

4. Method according to one of the preceding claims, **characterised in that** information relating to the predetermined velocity value (V1) and/or the predetermined rotational speed range (N1, N2) is stored in a modifiable non-volatile memory (19) arranged in the control device (18).

5. Method according to one of the preceding claims, **characterised in that** method step e) of patent claim 1 is carried out only if less than a predetermined time (T1) has passed since carrying out method step c) of patent claim 1.

6. Method according to claim 5, **characterised in that**, after the predetermined time (T1) has elapsed, stored information relating to the gear (AGANG) selected by the operating unit (12, 16) is deleted.

7. Method according to one of the preceding claims, **characterised in that** waiting for method step c) of patent claim 1 to be carried out is indicated visually.

8. Method according to one of the preceding claims, **characterised in that** the gear (AGANG) selected by the operating unit (12, 16) is indicated visually.

9. Method according to one of the preceding claims, **characterised in that** the coupling (24) is driver-actuated.

**Revendications**

1. Procédé de commande de l'enclenchement d'une vitesse sélectionnée dans le cas d'une boîte de vitesses non synchronisée (26) équipée de plusieurs vitesses pour un véhicule mû par moteur proche de l'arrêt du véhicule, le véhicule comprenant un dispositif de commande (18) pour la boîte de vitesse (26), un embrayage (24) en vue de la liaison du moteur (22) avec la boîte de vitesses (26), une unité de manoeuvre (12, 16) en vue de la sélection d'une vitesse désirée et un moyen (32) en vue de la détection de la vitesse de rotation (NE) de l'entrée de la boîte, **caractérisé par** les caractéristiques suivantes :

a) On vérifie si la vitesse du véhicule (V) est au-dessous d'une valeur d'une vitesse (V1) prescrite, qui indique une vitesse du véhicule (V) proche de l'arrêt de celui-ci,
b) Lorsque la vitesse du véhicule (V) est au-dessous de la valeur de vitesse prescrite (V1), on vérifie si au moyen de l'unité de manoeuvre (12, 16) une vitesse (VITESSE A) est sélectionnée,
c) Lorsqu'une vitesse (VITESSE A) a été sélectionnée, on vérifie si l'embrayage (24) est ouvert,
d) Si l'embrayage (24) a été ouvert, la vitesse de rotation (NE) de l'entrée de la boîte est comparée à une plage de vitesses de rotation prescrite (N1, N2),
e) Lorsque la vitesse de rotation (NE) de l'entrée de la boîte a atteint la plage de vitesses de rotation prescrite (N1, N2), une vitesse à enclencher (VITESSE E) est automatiquement enclenchée.

2. Procédé selon la revendication 1, **caractérisé en ce que** la vitesse à enclencher (VITESSE E) est la vitesse (VITESSE A) sélectionnée au moyen de l'unité de manoeuvre (12, 16).

3. Procédé selon la revendication 2, **caractérisé en ce qu'**on vérifie si dans les conditions de fonctionnement présentes du véhicule une autre vitesse (VITESSE G) est plus appropriée que la vitesse à enclencher (VITESSE E), et que, lorsque l'autre vitesse (VITESSE G) est plus appropriée, l'autre vitesse (VITESSE G) est utilisée en tant que vitesse à enclencher (VITESSE E).

4. Procédé selon une des revendications précédentes, **caractérisé en ce que** dans une mémoire non volatile (19) variable disposée dans le dispositif de commande (18) sont mémorisées des informations concernant la valeur de vitesse prescrite (V1) et/ou la plage de vitesses de rotation prescrite (N1, N2).

5. Procédé selon l'une des revendications précédentes, **caractérisé en ce que** l'étape de procédé e) de la revendication 1 n'est exécutée que lorsque depuis l'exécution de l'étape de procédé c) de la revendication 1 s'est écoulé moins qu'un temps prescrit (T1).

6. Procédé selon la revendication 5, **caractérisé en ce qu'**après expiration du temps prédéterminé (T1) une information mémorisée concernant la vitesse (VITESSE A) sélectionnée à l'aide de l'unité de manoeuvre (12, 16) est effacée.

7. Procédé selon une des revendications précédentes, **caractérisé en ce que** l'attente de l'exécution de l'étape de procédé c) de la revendication 1 est indiquée optiquement.

8. Procédé selon une des revendications précédentes, **caractérisé en ce que** la vitesse (VITESSE A) sélectionnée à l'aide de l'unité de manoeuvre (12, 16) est indiquée optiquement.

9. Procédé selon une des revendications précédentes, **caractérisé en ce que** l'embrayage (24) est à actionner par le conducteur.

Fig 1

**Fig. 2**

Start — 61

N1 < NE < N2 ? — 48

n

j

Geeigneten Gang GGANG bestimmen — 49

|AGANG - GGANG| < 2 ? — 50

n

j

51 — EGANG := AGANG

EGANG := GGANG — 52

EGANG einlegen — 53

Anzeige: EGANG — 54

Ende — 62

**Fig. 3**